# EUROPÄISCHE PATENTSCHRIFT

(11) **EP 0 546 372 B1**
(45) Veröffentlichungstag und Bekanntmachung des Hinweises auf die Patenterteilung: **23.07.1997**
(21) Anmeldenummer: 92119966.7
(22) Anmeldetag: 24.11.1992
(51) Int. Cl.: C09B 67/22, D06P 3/66

(54) **Reaktivfarbstoffmischungen**
Reactive dye mixtures
Mélanges de colorants réactifs

(30) Priorität: 09.12.1991 DE 4140541
(43) Veröffentlichungstag der Anmeldung: 16.06.1993
(73) Patentinhaber: BAYER AG, 51368 Leverkusen (DE)
(72) Erfinder: Schwarz, Max, Dr., W-5090 Leverkusen 3 (DE); Grütze, Joachim, Dr., W-5068 Odenthal (DE); Hildebrand, Dietrich, Dr., W-5068 Odenthal (DE); Wolff, Joachim, Dr., W-5068 Odenthal (DE); Stöhr, Frank, Dr., W-5068 Odenthal (DE)

(56) Entgegenhaltungen:
- DE-A- 4 039 406
- JP-A- 1 170 665
- PATENT ABSTRACTS OF JAPAN vol. 13, no. 442 (C-641)(3790) 4. Oktober 1989

## Beschreibung

Die Erfindung betrifft Mischungen von Reaktivfarbstoffen, die beim Färben von Cellulose oder Celluloseregeneratfasern ein gegenüber den Einzelkomponenten verbessertes Aufziehverhalten besitzen.

Reaktivfarbstoffe werden in Form ihrer Einzelkomponenten oder in Form von Mischungen verschiedener Farbstoffe zum Färben von Cellulosefasern verwendet. Bei den Mischungen sollen die Reaktivitäten der Einzelkomponenten der Mischung möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe stark unterschiedliche Reaktivitäten, so werden sie als voneinander verschiedenen Farbstoffsortimenten zugehörig angesehen, die nach unterschiedlichen Alkali- und Temperaturbedingungen angewandt werden müssen. Nach dem heutigen Sprachgebrauch werden die Reaktivfarbstoffe aufgrund ihrer unterschiedlichen Reaktivität in drei Gruppen eingeteilt: Hochreaktive Reaktivfarbstoffe, die bereits unter 40°C färbbar sind, bezeichnet man als Kaltfärber. Farbstoffe, die bei 40 bis 60°C angewandt werden, als Warmfärber, und Farbstoffe, die im Bereich von 80°C angewandt werden, als Heißfärber. Aufgrund ihrer unterschiedlichen Reaktivität und Substantivität werden die drei unterschiedlich reaktiven Farbstoffsortimentsgruppen mittels gruppentypischer Verfahrensvorschriften appliziert.

Der Unterschied zwischen der Anwendung eines Warmfärbers und eines Heißfärbers besteht z.B. in einer beim Heißfärber um 20 bis 40°C höheren Färbetemperatur, in einer um 40 g/l Kochsalz höheren Elektrolytkonzentration und einer um 10 g/l höheren Sodakonzentration des Färbebades.

Farbstoffmischungen sind bereits bekannt aus EP-A-478 503.

Aus JP-A 1 170 665 sind Farbstoffmischungen von Diazofarbstoffen, wobei eine FarbstoffKomponente einen durch p-Chloranilino substituierten Fluortriazinylrest aufweist.

Der Erfindung liegt die Aufgabe zugrunde, eine brillante Reaktivfarbstoffmischung bereitzustellen, die bei guter Fixierausbeute einen gleichmäßigen Fixierkurvenverlauf zeigt, der dem der Einzelfarbstoffe überlegen ist.

Die Erfindung betrifft eine Farbstoffmischung aus vorzugsweise nuancengleiche Töne ergebenden Farbstoffen, dadurch gekennzeichnet, daß jeweils wenigstens ein Fluortriazinfarbstoff und/oder Fluorpyrimidinfarbstoff der allgemeinen Formel (I) 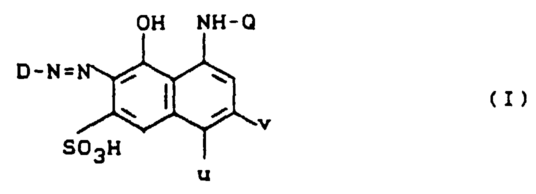 und ein Vinylsulfonylfarbstoff der Formel (II) enthalten sind 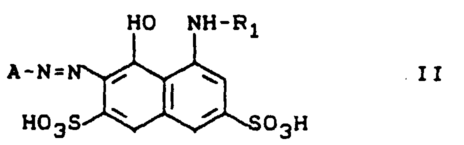 worin bedeuten
- A =: 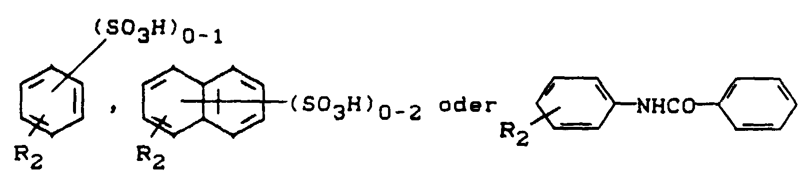
- D =: 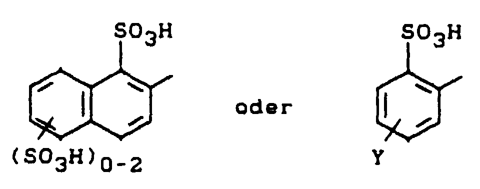
- Q =: 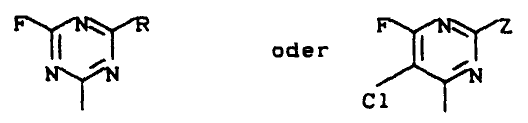
- Y =: unabhängig voneinander H, -SO₂-C₂H₄-O-SO₃H oder -SO₂-CH=CH₂,
- Z =: F oder H
- u, v =: H oder SO₃H, wobei u ungleich v ist
- R =: 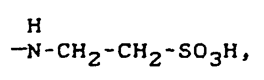 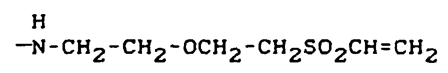 oder 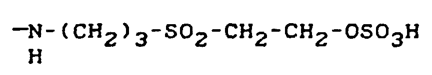
- R_{1 =}: 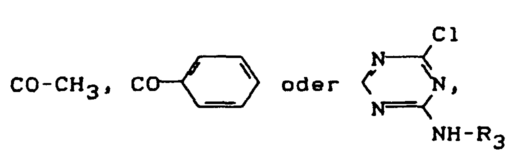
- R₂ =: HO₃SOCH₂-CH₂-O₂S- , -SO₂-CH=CH₂
- R₃ =:

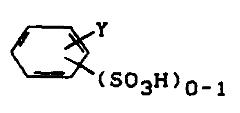

Besonders bevorzugte Verbindungen (I) sind: 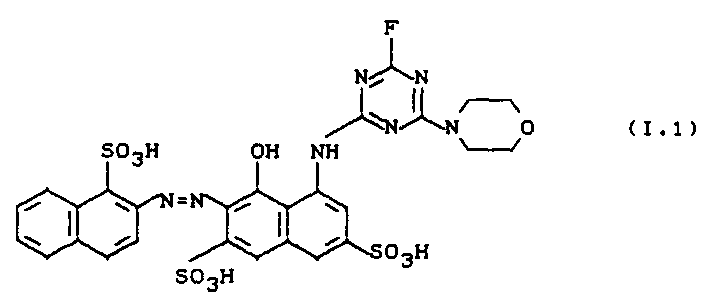 und

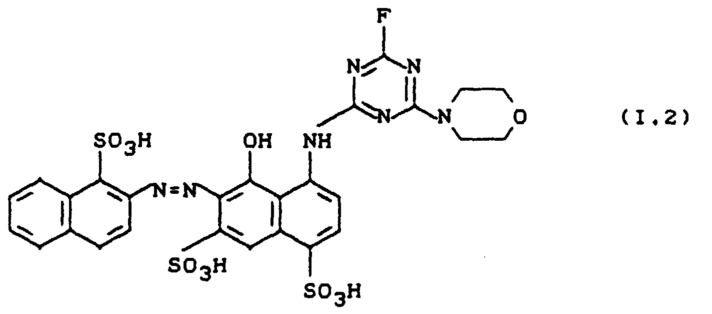

Eine besonders bevorzugte Verbindung (II) ist:

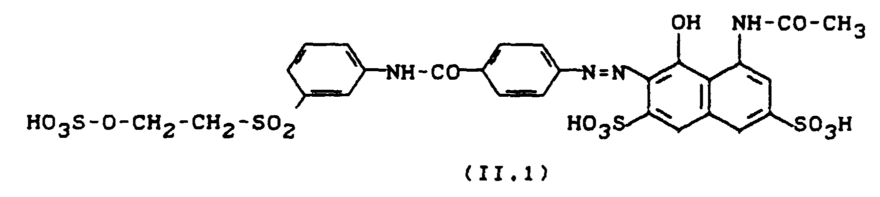

In einer bevorzugten Ausführungsform der Erfindung sind, bezogen auf die Mischung der Farbstoffe I und II, 10 bis 90 Gew.-Teile I und 90 bis 10 Gew.-Teile II, insbesondere 30 bis 70 Gew.-Teile des Farbstoffs I und 70 bis 30 Gew.-Teile des Farbstoffs II enthalten.

Die Farbstoffmischung kann die üblichen Zusätze enthalten, vorzugsweise enthält sie auf 100 Gew.-Teile Reaktivfarbstoffmischung 1 bis 50 Gew.-Teile eines anorganischen Salzes, 1 bis 5 Gew.-Teile eines anorganischen Puffers, 0,5 bis 10 Gew.-Teile eines organischen anionischen Dispergiermittels und 0,5 bis 5 Gew.-Teile eines Entstaubungsmittels.

Die Farbstoffmischung zeigt bei stark unterschiedlicher Reaktivität der Einzelkomponenten egale Färbungen mit guter Fixierausbeute und einem sehr gleichmäßigen Fixierverhalten. Erhalten werden brillantrote Färbungen.

Die Farbstoffmischung kann vorzugsweise zum Färben von Baumwolle und anderen Cellulosefasern im Ausziehverfahren auf üblichen Färbeaggregaten verwendet werden.

Färbetemperaturen von 40°C bis 80°C sind möglich, die bevorzugte Färbetemperatur ist 60°C, die bevorzugte Starttemperatur 30°C.

Vorzugsweise wird gemäß folgendem Ablauf gefärbt

| Zeit (Min) | Temperatur (°C) | Maßnahme |
|---|---|---|
| 0 | 30 | |
| 10 | 30 | Zusatz von Salz, insbesondere Natriumsulfat, Kochsalz |
| 30 | 30 | Zusatz von Fixiermittel, insbesondere Soda, Natronlauge |
| 30 | 30 → 60 | Aufheizen auf 60°C |

### Vergleichsbeispiel

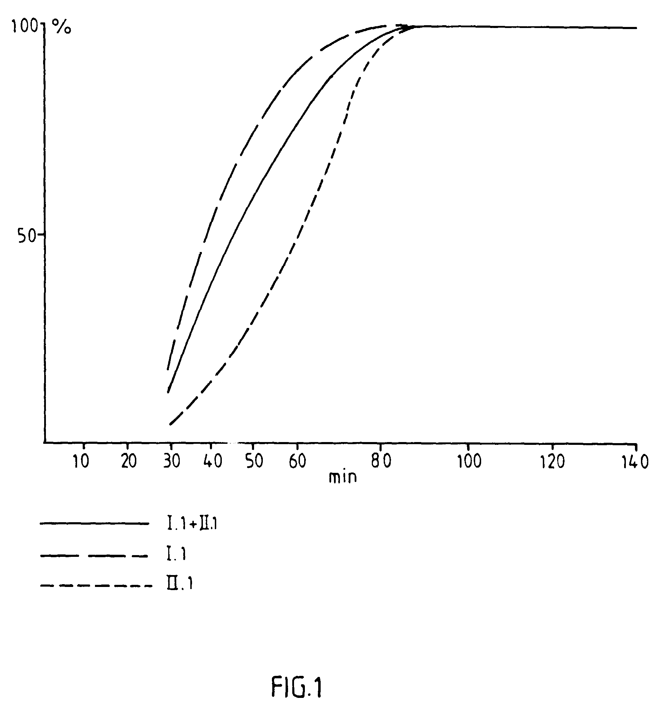

Werden die Einzelfarbstoffe der Farbstoffmischungen nach diesem Färbeschema gefärbt, so ergeben sich die in Fig. 1 dargestellten Fixierkurven. Aufgetragen ist hierbei der fixierte Farbstoff auf der Faser in % der Endfixierung gegen die Zeit.

Der reaktive Farbstoff (Formel I) beginnt nach Zugabe des Fixiermittels bei 30°C sofort mit der Cellulosefaser zu reagieren. Wenn die Hauptreaktion sich verlangsamt, beginnt die Aufheizphase auf die Endtemperatur von 60°C, während der eine erneute Reaktionsbeschleunigung beobachtet wird.

Kurze Zeit nachdem 60°C erreicht sind, geht die Fixierkurve in den waagerechten Teil über; die Färbung ist beendet.

Der weniger reaktive Farbstoff (Formel II) reagiert bei den gewählten Startbedingungen zunächst langsam mit der Faser. Während der Aufheizphase tritt jedoch eine deutliche Steigerung der Reaktionsgeschwindigkeit ein.

### Erfindungsgemäßes Beispiel

1000 Teile einer wäßrigen Färbeflotte werden bei 30°C mit 100 Teilen Baumwollwirkware und 2 Teilen Reaktivfarbstoffmischung versetzt. Diese Mischung besteht aus je 1 Teil des Farbstoffs der Formel (I) und des Farbstoffs der Formel (II).

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Die Färbeflotte wird bei lebhafter Flotten- und Warenbewegung innerhalb 30 Minuten auf 60°C erwärmt und bei dieser Temperatur 90 Minuten belassen.

Danach wird die Flotte abgelassen, zweimal bei 50°C und zweimal bei 80°C gespült. Anschließend wird 15 Minuten kochend geseift und kalt gespült. Man erhält eine brillante Rotfärbung mit guten Echtheitseigenschaften.

Die Einzelkomponenten zeigen in der Mischung ein gegenüber dem Typfarbstoff harmonischeres Aufziehverhalten, welches sich in einer gegenüber der Aufziehkurve von I flacheren und gegenüber der Aufziehkure II steileren Aufziehkurve äußert, d.h. der reaktionsträgere Farbstoff (Formel II) fixiert in der beanspruchten Mischung (I + II) bei gleichen Fixierbedingungen schneller als seinem Fixierverhalten als Typ entspricht.

Unerwartet und überraschend ist die Tatsache, daß die miteinander gemischten Farbstoffe eine gemeinsame Fixierkurve durchlaufen, die ein Maß für die positive gegenseitige Beeinflussung der Farbstoffe ist.

Weiterhin ist es überraschend, daß die reaktivere Mischungskomponente trotz der scheinbar zu scharf gewählten Fixierbedingungen das Material gleichmäßig und mit hoher Ausbeute anfärbt. Die weniger reaktive Mischungskomponente erreicht andererseits trotz der scheinbar zu "milden" Reaktionsbedingungen gute Endausbeuten.

## Patentansprüche

1. Farbstoffmischung aus wenigstens zwei Reaktivfarbstoffen, dadurch gekennzeichnet, daß jeweils wenigstens ein Fluortriazinfarbstoff und/oder Fluorpyrimidinfarbstoff der allgemeinen Formel (I) 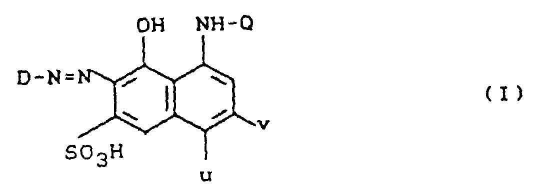 und ein Vinylsulfonylfarbstoff der Formel (II) enthalten sind 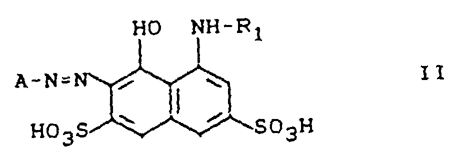 worin bedeuten
A = 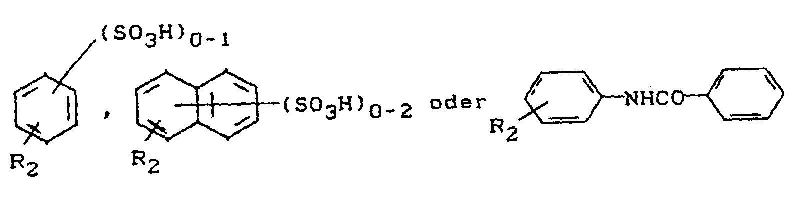
D = 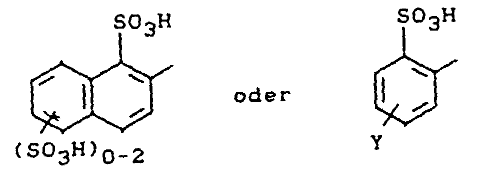
Q = 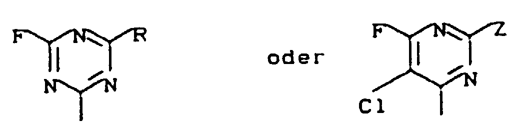
Y = unabhängig voneinander H, -SO₂-C₂H₄-O-SO₃H oder -SO₂-CH=CH₂,
Z = F oder H
u und v = H oder SO₃H, wobei u ungleich v ist
R = 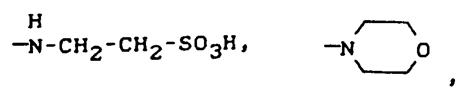 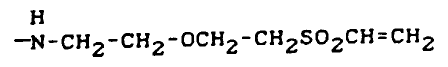 oder 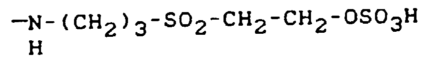
R₁ = 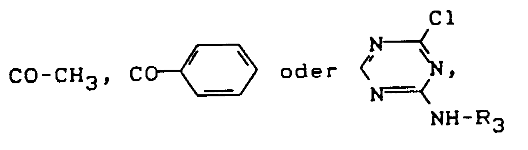
R₂ = HO₃SOCH₂-CH₂-O₂S- , -SO₂-CH=CH₂,
R₃ =

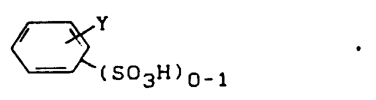

2. Mischung gemäß Anspruch 1, dadurch gekennzeichnet, daß die Farbstoffe nuancengleich brillantrot färben.

3. Mischung gemäß wenigstens einem der vorhergehenden Ansprüche, dadurch gekennzeichnet, daß sie folgende Verbindung II.1 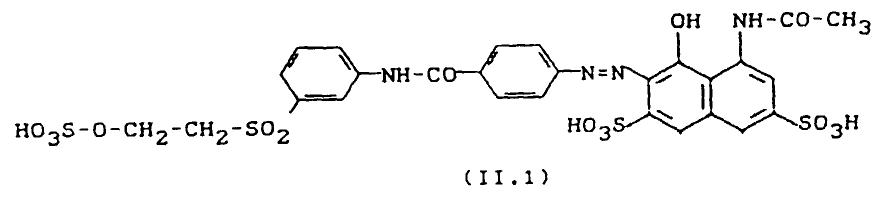 enthält, sowie wenigstens einen der Farbstoffe I.1 und I.2 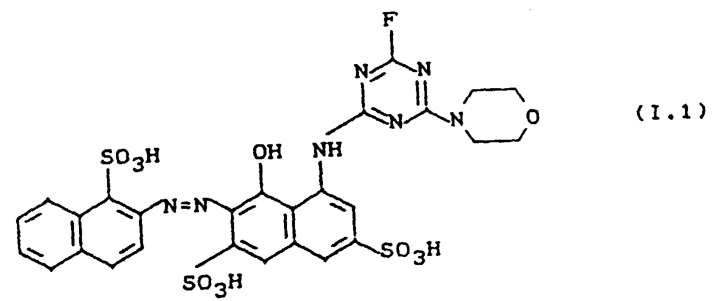 und

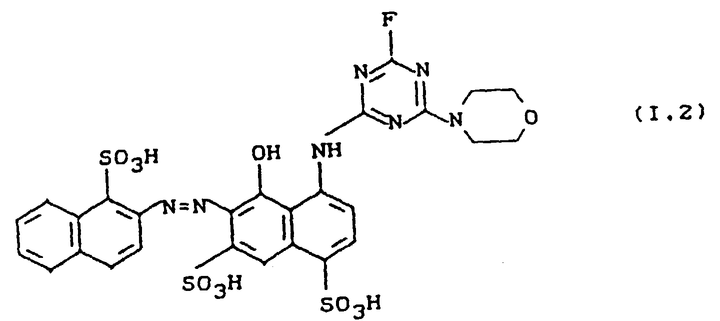

4. Mischung gemäß wenigstens einem der vorhergehenden Ansprüche, dadurch gekennzeichnet, daß die Mischung 20 bis 80 Gew.-Teile des Farbstoffs der Formel (I) und 80 bis 20 Gew.-Teile des Farbstoffs der Formel (II) enthält.

5. Mischung gemäß wenigstens einem der vorhergehenden Ansprüche, dadurch gekennzeichnet, daß die Farbstoffmischung in 100 Gew.-Teile Mischfarbstoff 1 bis 50 Gew.-Teile eines anorganischen Salzes enthält.

6. Mischung gemäß wenigstens einem der vorhergehenden Ansprüche, dadurch gekennzeichnet, daß 100 Gew.-Teile des Mischfarbstoffs 1 bis 5 Gew.-Teile eines anorganischen Puffers enthalten, der einen pH von 6,5 bis 7,5 ergibt.

7. Mischung gemäß wenigstens einem der vorhergehenden Ansprüche, dadurch gekennzeichnet, daß die Mischung 0,5 bis 10 Gew.-Teile eines organischen anionischen Dispergiermittels enthält.

8. Mischung gemäß wenigstens einem der vorhergehenden Ansprüche, dadurch gekennzeichnet, daß die Mischung 0,5 bis 5 Gew.-Teile eines Entstaubungsmittels enthält.

9. Verfahren zum Färben von Cellulosefasern und Cellulosemischfasern mit einer Mischung aus Reaktivfarbstoffen, dadurch gekennzeichnet, daß eine Mischung gemäß wenigstens einem der vorhergehenden Ansprüche verwendet wird.

## Claims

1. Dyestuff mixture of at least two reactive dyestuffs, characterised in that in each case at least one fluorotriazine dyestuff and/or fluoropyrimidine dyestuff of the general formula (I) 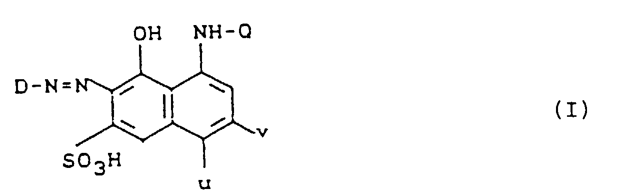 and a vinylsulphonyl dyestuff of the formula (II) 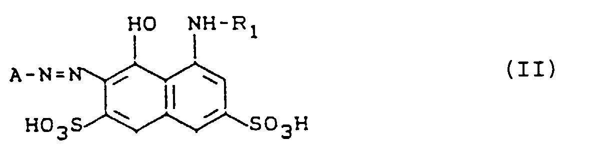 are present in which
A denotes 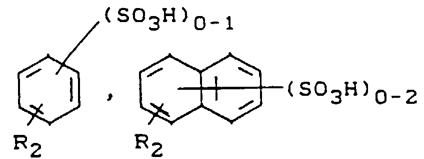 or 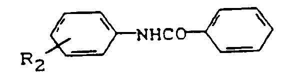
D denotes 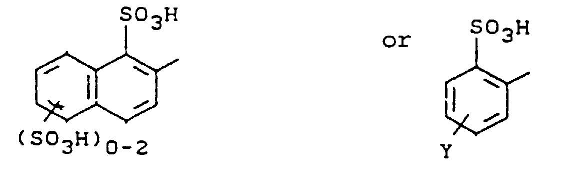
Q denotes 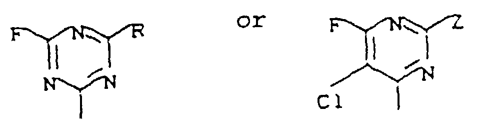 each Y denotes, independently of the others, H, -SO₂-C₂H₄-O-SO₃H or -SO₂-CH=CH₂,
Z denotes F or H,
u and v denote H or SO₃H, u being different from v,
R denotes 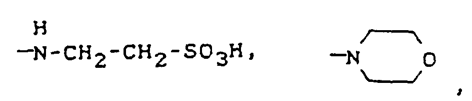 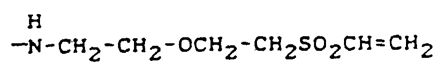 or 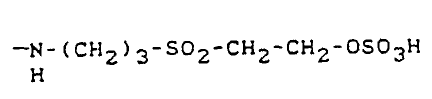
R₁ denotes CO-CH₃, 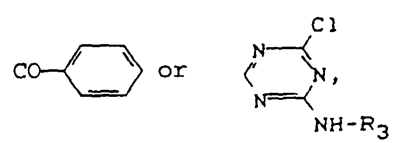
R₂ denotes HO₃SOCH₂-CH₂-O₂S-, -SO₂-CH=CH₂ and
R₃ denotes

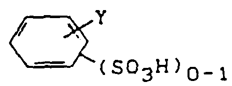

2. Mixture according to Claim 1, characterised in that the dyestuffs produce brilliant red dyeings having the same hue.

3. Mixture according to at least one of the preceding claims, characterised in that it contains the following compound II.1 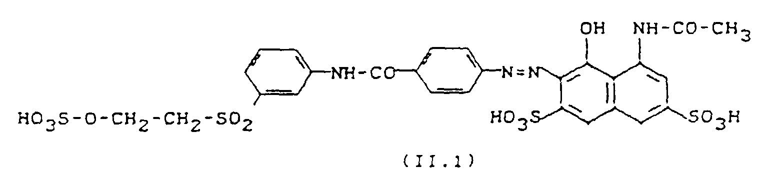 and at least one of the dyestuffs I.1 and I.2 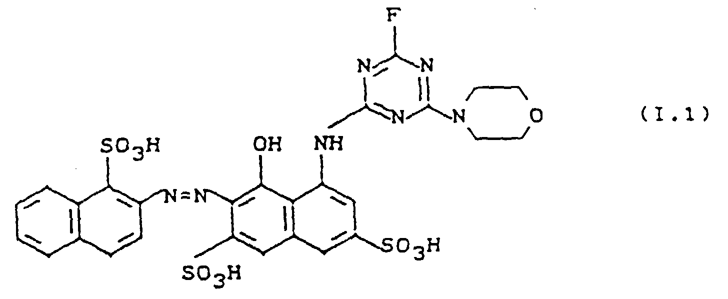 and

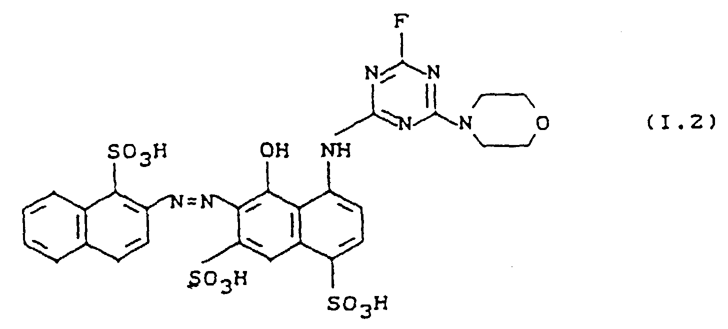

4. Mixture according to at least one of the preceding claims, characterised in that the mixture contains 20 to 80 parts by weight of the dyestuff of the formula (I) and 80 to 20 parts by weight of the dyestuff of the formula (II).

5. Mixture according to at least one of the preceding claims, characterised in that the dyestuff mixture contains 1 to 50 parts by weight of an inorganic salt in 100 parts by weight of mixed dyestuff.

6. Mixture according to at least one of the preceding claims, characterised in that 100 parts by weight of the mixed dyestuff contain 1 to 5 parts by weight of an inorganic buffer producing a pH of 6.5 to 7.5.

7. Mixture according to at least one of the preceding claims, characterised in that the mixture contains 0.5 to 10 parts by weight of an organic anionic dispersant.

8. Mixture according to at least one of the preceding claims, characterised in that the mixture contains 0.5 to 5 parts by weight of a dust-proofing agent.

9. Process for the dyeing of cellulose fibres and cellulose blend fibres with a mixture of reactive dyestuffs, characterised in that a mixture according to at least one of the preceding claims is used.

## Revendications

1. Mélange de colorants consistant en au moins deux colorants réactifs, caractérisé en ce qu'il contient dans chaque cas au moins un colorant de fluorotriazine et/ou un colorant de fluoropyrimidine de formule générale (I): 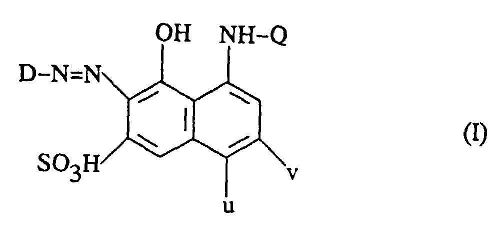 et un colorant vinylsulfonylique de formule (II): 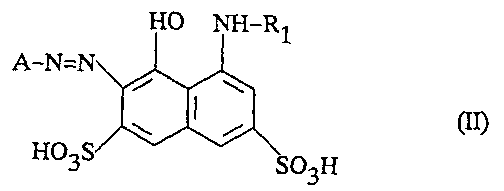 dans lesquelles
A = 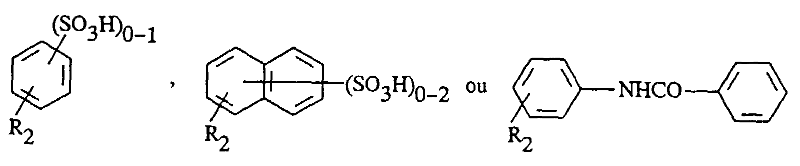
D = 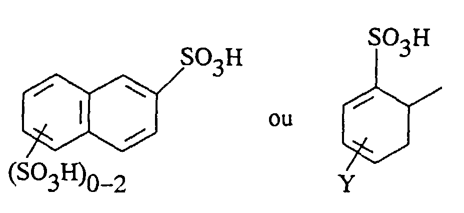
Q = 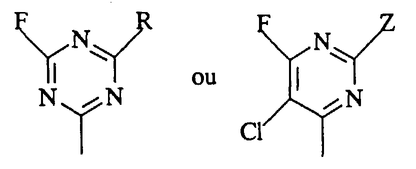 les symboles Y représentent chacun, indépendamment les uns des autres, H, -SO₂-C₂H₄-O-SO₃H ou -SO₂-CH=CH₂,
Z = F ou H,
u et v = H ou SO₃H, u et v étant différents,
R = 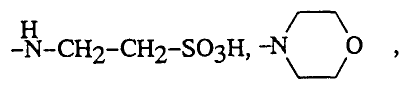 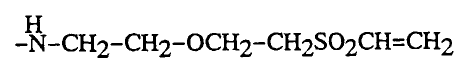 ou 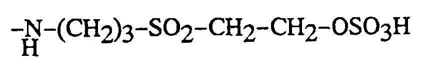
R₁ = 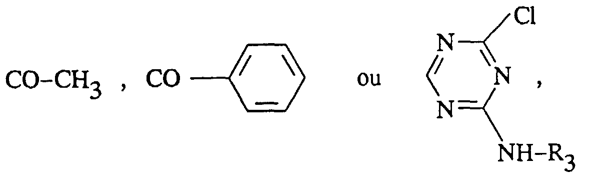
R₂ = HO₃SOCH₂-CH₂-O₂S-, -SO₂-CH=CH₂
R₃ =

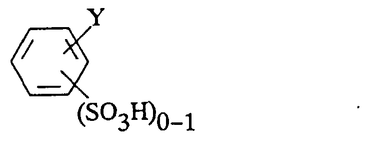

2. Mélange selon la revendication 1, caractérisé en ce que les colorants teignent en nuances identiques d'un rouge brillant.

3. Mélange selon au moins une des revendications qui précèdent, caractérisé en ce qu'il contient le composé suivant II.1 : 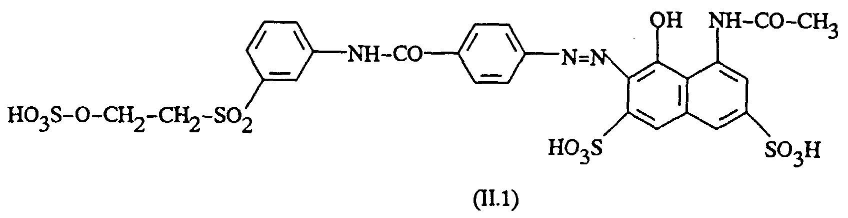 et au moins un des colorants I.1 et I.2 : 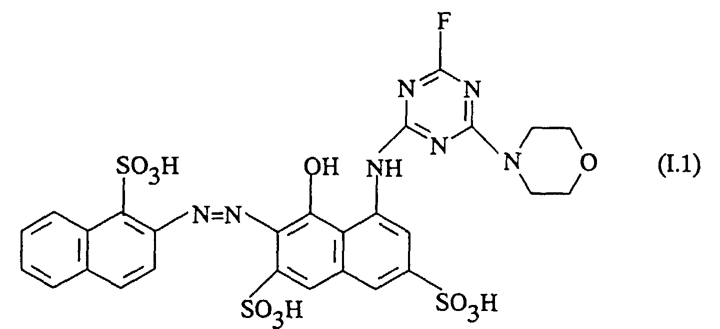 et

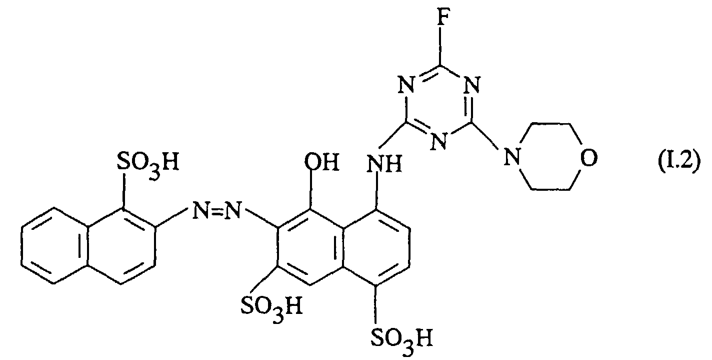

4. Mélange selon au moins une des revendications qui précèdent, caractérisé en ce qu'il contient 20 à 80 parties en poids du colorant de formule (I) et 80 à 20 parties en poids du colorant de formule (II).

5. Mélange selon au moins une des revendications qui précèdent, caractérisé en ce qu'il contient, dans 100 parties en poids des colorants mélangés, 1 à 50 parties en poids d'un sel minéral.

6. Mélange selon au moins une des revendications qui précèdent, caractérisé en ce qu'il contient pour 100 parties en poids des colorants mélangés, 1 à 5 parties en poids d'un tampon minéral donnant un pH de 6,5 à 7,5.

7. Mélange selon au moins une des revendications qui précèdent, caractérisé en ce qu'il contient de 0,5 à 10 parties en poids d'un agent dispersant organique anionique.

8. Mélange selon au moins une des revendications qui précèdent, caractérisé en ce qu'il contient de 0,5 à 5 parties en poids d'un agent anti-poussière.

9. Procédé pour teindre des fibres cellulosiques pures ou mélangées à l'aide d'un mélange de colorants réactifs, caractérisé en ce que l'on utilise un mélange selon au moins une des revendications qui précèdent.
